Europäisches Patentamt

European Patent Office

Office européen des brevets

(11) Publication number: 0 403 092 A2

# EUROPEAN PATENT APPLICATION

(21) Application number: 90305651.3

(22) Date of filing: 24.05.90

(51) Int. Cl.5: H04N 5/32, H05G 1/60

The title of the invention has been amended (Guidelines for Examination in the EPO, A-III, 7.3).

(30) Priority: 14.06.89 GB 8913659

(43) Date of publication of application:
19.12.90 Bulletin 90/51

(84) Designated Contracting States:
AT BE CH DE DK ES FR GB GR IT LI LU NL SE

(71) Applicant: MICROTEL LOGIC LIMITED
163 Parker Drive
Leicester LE4 0JP(GB)

(72) Inventor: Miller, S. F.
25 Fox Hill
Whissendine, Leicestershire(GB)
Inventor: Rutter, J.
5 Kirkland Close
Castle Donnington, Derby DE7 2OY(GB)
Inventor: Jenkins, D. J.
5 Hall Drive, Burton-on-the-Wolds
Nr Loughborough, Leicestershire LE12 5AD(GB)

(74) Representative: SERJEANTS
25, The Crescent King Street
Leicester, LE1 6RX(GB)

(54) Apparatus for detecting, tracking and imaging movement.

(57) Apparatus of the invention includes means (5) for providing a difference signal representing the difference between first and second video signals representing earlier and later scans or numbers of scans respectively of an area being surveyed. The difference signal represents movement that has taken place between the earlier and later scans, and is fed to peak hold circuitry (6) in which it is broken up into pixel-sized bytes or subelements. If any byte is above a threshold value the associated pixel of a video display screen (7) is displayed and is maintained in the displayed condition for subsequent scans and comparisons. A track of the movement is thus built up across the screen (7).

The apparatus may take the form of digital vascular imaging apparatus, in which case the first and second video signals are the successive outputs of fluoroscopic X-ray apparatus, and the movement detected and imaged is the movement of a leading edge of a contrast agent injected into the vascular system.

FIG.1

## DETECTING, TRACKING AND IMAGING MOVEMENT

### Field of the Invention

The invention relates to apparatus for detecting, tracking and imaging movement. The apparatus may be useful in a variety of fields, including intruder detection, security surveillance. tracking moving objects and rate and acceleration sensors. However, an important aspect of the invention is the provision of apparatus for digital vascular imaging in which a surgeon or other appropriately qualified person can use an X-ray imaging device to track the movement of an intravenously injected contrast agent through a blood vessel as a means for producing a satisfactory image for use in a subsequent diagnosis or surgical procedure such as angioplasty.

### Background Art

The invention will be discussed in the context of digital vascular imaging (DVI), although it has much wider applications. Current DVI surgical techniques involve preparing an X-ray picture of a blood vessel to identify the location of any constriction, and then passing a ballooning catheter along the blood vessel to that location prior to inflating the balloon end of the catheter to expand the constriction back to an acceptable size. The initial picture of the blood vessel is obtained by taking a high dose X-ray snapshot picture of an area being surveyed, and producing from that image a digital video signal. That digital video signal is stored while a contrast agent is injected into the patient's blood vessel upstream of the area being surveyed. The contrast agent is a solution that shows up on the X-ray picture, and a contrast agent frequently used is an isotonic solution containing iodine. It must be injected in an amount sufficient completely to fill the area being surveyed, and as it is carried through that area a series of high-dose X-ray snapshot pictures is taken, from which series any one picture can be selected as being a picture of the area being surveyed and containing the contrast agent. That one snapshot picture is converted into a second digital video signal. Then by subtracting one digital video signal from the other, all of the bone, tissue shadow and other elements which the two snapshot pictures have in common can be masked out, leaving only the image of the contrast agent. From that image the surgeon can see the exact location of the constriction, and the image can be held on the screen and overlaid by a similar but real-time X-ray image as the catheter is passed to the precise point of the constriction.

DVI apparatus is costly and slow to use, and the process described above has its medical disadvantages. The X-ray snapshot pictures require a high dose of X-radiation, for which high intensity X-ray equipment is necessary. The contrast agent has a degree of toxicity and must be used in a carefully measured dose. In practice in order to achieve satisfactory images the contrast agent is injected in a relatively large volume using computer-controlled injection equipment, until the video image shows that the whole of the area being surveyed has been filled with the contrast agent.

GB-A-2020945 describes a DVI process in which a mask image is created from a series of television fields, and is used for masking unwanted elements from each of a subsequent sequence of X-ray subtraction images. Only a single mask is created, and is an average or integration of television fields over a relatively long time period so as to blur any motion that might have occurred during creation of that mask image. The mask is created from television fields imaged, processed and stored prior to any real-time processing of the television fields being viewed.

It is desirable, when passing the catheter along the blood vessel to the area of constriction, to have the entire path of the blood vessel displayed on the video screen. This technique is well-known as road-mapping, and can be achieved using known DVI equipment. However, the computer programs which process the digital video images to produce road-mapping are cumbersome to use and generally have to be loaded separately into the memory of the DVI equipment. This interrupts the surgical procedure and is therefore often unpopular with medical staff. Many surgeons therefore forfeit the road-mapping facility and instead rely on multiple small injections of contrast agent to identify and map the passage of the catheter along the vessel to the site of the constriction.

Current DVI apparatus, because it uses high intensity X-ray snapshot pictures, cannot make use of real-time noise reduction video processing techniques, and the quality of the resulting video image is sometimes poor.

It is an object of the invention to avoid the above disadvantages of DVI apparatus and techniques, and to provide an apparatus for detecting, tracking and providing an image of movement which has applications in vascular surgery as well as a variety of non-medical applications.

### Summary of the Invention

The invention provides apparatus for detecting, tracking and imaging movement, which has a video display screen for displaying a trace of a path of detected movement, an imaging device for producing a series of first video signals each representing a scan or a number of scans of an area being surveyed and a series of second digital video signals each representing a later scan or a later number of scans of the same are being surveyed, the first video signals and the second video signals are separated from each other by a constant time delay, and in that comparing means are provided for achieving real time noise reduction by providing a difference signal representing the difference between each succesive pair of first and second video signals in the series; and peak hold circuitry for dividing the difference signal into subelements each corresponding to one pixel of the video display screen, comparing each subelement with a predetermined threshold value and causing that pixel to be displayed and maintained displayed if the comparison indicates that the subelement exceeds the threshold.

Each first video signal effectively becomes the mask which is used to remove unwanted elements from the displayed trace by comparison with the corresponding second signal. Unlike the blurred mask of GB 2020945, the mask is constantly renewed at the same frequency as the second signal. The mask is in real time because each successive second video signal is compared with the immediately preceding first video signal.

The video signals are preferably in digital form, although it is quite feasible to use analog signals.

In the context of DVI. the apparatus of the invention utilises low power, continuous scanning X-ray imaging devices in place of the high intensity snapshot X-ray devices of the prior art. A low dosage intravenous injection of the contrast agent is all that is necessary, as the apparatus tracks the movement of the leading edge boundary of the contrast agent through the vascular system rather than taking discrete snapshot images to include one in which the contrast agent fills the entire subarea (eg blood vessel) of interest. The movement of the leading edge boundary of the contrast agent is identifiable by the difference comparison of the first and second digital video signals. Setting the predetermined threshold of the comparison at a selected level enables a difference in the Intensity of the first and second video signals (representing the leading edge boundary of a very low dosage intravenous injection of contrast agent) to be identified as a detected movement. However, the intensity of illumination of the corresponding pixel on the video display screen is under program control and the contrast of the final screen display can be controlled quite independently of the contrast at that leading edge boundary. In this way a low dosage injection of contrast agent can produce a high contrast final image.

The maintenance of the pixel display on the video display screen may be for a limited period of time or until cancelled by the operator. In DVI apparatus, the pixel display is preferably maintained until cancelled by the operator. Successive pixels on the screen are therefore progressively displayed by the peak hold circuitry, and held or maintained in their displayed condition until the complete path of the leading edge boundary of the contrast agent through the surveyed area of the vascular system has been traced. The trace that is built up is held on the screen for immediate superimposition on a live fluoroscopic image of the same area, thus achieving a completely road-mapped display of the appropriate part of the vascular system. A ballooning catheter may therefore be guided through the same vascular route, and its progress monitored on the video display screen.

The tracking of the movement of the leading edge boundary of the contrast agent and the recording of that movement path frame by frame, either in a random access memory or by any other means, would allow the user subsequently to select any group of consecutive frames, apply the peak hold facility, and thus produce an image of any selected length of blood vessel. The movement of the leading edge boundary of the contrast agent through the blood vessel is a time-dependant function, and the above selection is essentially one which enables the user to map only the portion of the vascular system in the area of survey which carries the leading edge boundary of the contrast agent during the selected time window. Careful use of this technique would avoid many of the problems of individual vessel visualisation caused by overlapping blood vessels in the image produced by conventional DVI systems.

It is also possible to use these same techniques in 3D X-ray fluoroscopy imaging systems and any other non-medical 3D imaging systems. In any such 3D imaging systems it is possible accurately to measure path distance and direction at any instant through the degree of separation of two wavefront images, their relative size and the rate at which they move towards or away from each other.

In the context of DVI equipment and vascular surgery techniques the invention has the advantages of very substantial cost savings (principally by using more commonly available X-ray equipment), greater potential patient safety (due to the lower dosages of X-ray irradiation and of contrast agent), greater speed of operation (particularly due to the avoidance when using the apparatus of the invention of having to take X-ray snapshot pictures before injection of the contrast agent) and automatic road-mapping of the vascular system.

Other advantages, which are of equal relevance in the fields of surveillance and rate and acceleration sensing as well as in DVI, include the ability to process the first and second video signals to secure real time noise filtration prior to feeding those signals to the comparing means. Post-processing image enhancement techniques such as line edge enhancement may also be used to improve the quality of the final video display.

In the fields of surveillance and tracking, and for rate and acceleration sensor apparatus, it may be desirable to maintain the displayed pixels on the video display screen for only a limited period. The initial display of those pixels indicates a front of detected movement. Continuous maintenance of the display would result in a complete mapping of the movement path as described above in the context of DVI. If each pixel, after being displayed, is maintained for only a limited period, then the video screen display will illustrate in bold contrast any detected movement, with a leading edge of the displayed image representing the leading front of the movement and a trailing edge of the displayed image trailing behind the leading edge by a distance which is a direct measure of the rate of movement. Circuitry may, if desired, be provided to measure the width of the displayed image to provide a read-out of the rate of movement.

Relative flow rates may also be measured between any two points by recording the time interval for the passage of the wavefront between those two points.

Colour circuitry may, if desired, be incorporated as a means of providing a composite image in which the displayed pixels are maintained in one colour for a predetermined time to identify the moving front and then in another colour to identify the mapped route of that front.

## Drawings

Figure 1 is a flow chart diagram illustrating schematically a movement detector according to the invention.

Figure 2 is a flow chart diagram illustrating a digital vascular imaging apparatus based on the movement detector of Figure 1 but incorporating the additional facility of being able to display the progress of a catheter through the vascular system of a patient, over a road-mapped display of the vascular system, and

Figure 3 is a flow chart diagram illustrating the apparatus of Figure 2, but in rather more detail.

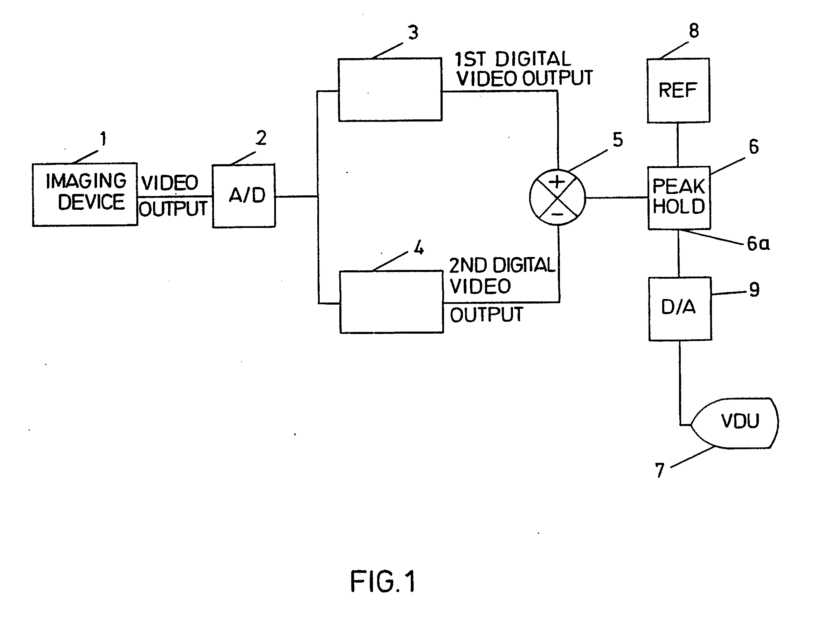

Referring first to Figure 1, there is illustrated a movement detector according to the invention which is represented in sufficiently general terms that it may be configured as a digital vascular imaging apparatus, a surveillance detector, a rate sensor or an acceleration sensor.

In Figure 1, an imaging device 1 may be a video camera, an infrared camera with a video output or an X-ray apparatus with a video output, depending on the intended end use of the apparatus. The output pf the device, if an analog video signal, is converted to a digital signal by an analog-to-digital converter 2 the output of which is fed to two processor blocks 3 and 4.

The processor blocks 3 and 4 may take any of a variety of forms, the net result of which is that the first digital video output from the block 3 represents a marginally earlier signal than the second digital video output from the block 4. For example, the block 3 could be a DELAY circuit so that its output lagged behind its input by one or more video scans, and the block 4 could be a direct connection.

The first and second digital video outputs would then be successive video scans from the imaging device 1. Alternatively, the block 3 could be an integrating or averaging circuit with a first time constant T, so that its output at any instant is an integration or average of a number of video scans over the previous period T, and the block 4 could be a similar integrating or averaging circuit with a second and shorter time constant T2. At a given instant the second digital video output would be an integration or average of a number of previous video scans over the shorter time constant T2, which would make it effectively a later signal than the first digital video output. The two outputs are, however, constantly updated as the imaging device 1 continues to scan the area being surveyed, so that the outputs of blocks 3 and 4 permit a real time comparison of current and immediately preceding scans or numbers of scans.

The real time comparison is effected by a difference generator or subtractor 5 which shows the first video output signal being applied to a non-inverting or positive terminal and the second video output signal being applied to an inverting or negative terminal. This has the effect that the immediately preceding scan acts as a mask to cancel out all static elements of the area being surveyed, so that the output of the subtractor 5 is a digital video signal representing only the detected movement that has taken place in the period (T1-T2) between the successive scans. That digital video signal output of subtractor 5 is a difference signal which is input to a peak hold circuit 6 where it is broken up into subelements or words each corresponding to one pixel of an associated video display screen 7. Each word is compared in value to a reference 8 which may be preset or user-variable, and if the word value exceeds the reference value a corresponding word at an output port 6A is driven to a new predefined level. Thus the output 6A of the peak hold circuit 6 is a high contrast digital video signal in which each pixel word once driven to display by the corresponding pixel word of the difference signal passing the reference value is held at its new state irrespective of the subsequent characteristics of the difference signal.

A digital-to-analog converter 9 may be required before the output of the peak hold circuit can be displayed on the video display screen 7. The displaying of each pixel on the screen may be black-on-white or white-on-black, or may be any coloured display appropriate to the apparatus.

The holding of the individual pixel word at their new level may be maintained permanently until reset by an operator, or may be maintained for a limited time only. In the former case the continued use of the apparatus causes the display to build up a complete trace of a movement path of a body across the area being surveyed. That would be useful in vascular surgery, when the complete trace represents the entire vascular system in the area being surveyed. In the latter case the continued use of the apparatus causes the display to show a bright image of the leading edge of a moving body. The width of that image, in the direction of movement, is an indication of the speed of the movement and can be processed in suitable circuitry (not shown) to produce a visual readout of speed or acceleration.

If desired the two options considered above could be combined, particularly on a colour monitor, so that each pixel is illuminated in a first colour or tone for a limited time and then reverts to a second colour or tone that is distinguishable from the screen background. The screen display then shows both the leading edge of the moving body, in an image width dependent on speed of movement, and the complete historical trace of movement during the survey period.

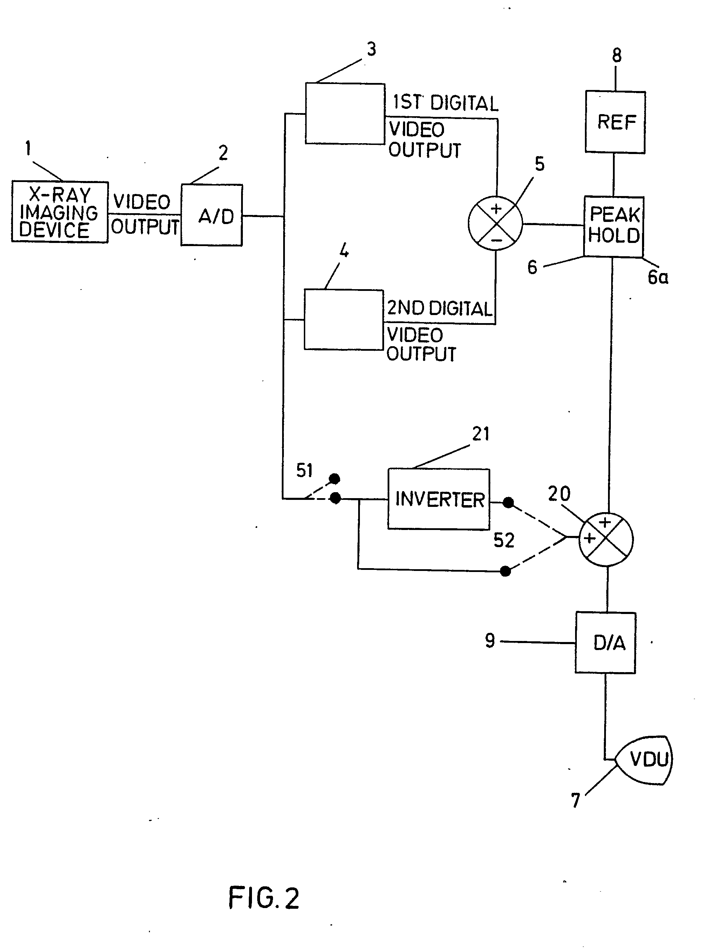

Figure 2 shows a modification of the circuitry of Figure 1 which illustrates, still in general schematic form, the additional circuitry that is desirable when the apparatus is configured as a digital vascular imaging apparatus. Where possible the same reference numerals are used in Figure 2 as in Figure 1 and unnecessary repetition of the description of those components is avoided.

In Figure 2 the imaging device 1 is a low density X-ray device which sequentially scans the area being surveyed, such as a part of the body of a patient. When a switch 51 is open, the apparatus operates as previously described to build up a video picture of the vascular system in the area being surveyed. The moving body, movement of which is detected, is the leading edge or front of a small dose of intravenously injected contrast agent such as an isotonic solution containing iodine. The dose can be small because only the leading edge is of interest; it is not necessary to flood the entire surveyed area of the vascular system with contrast agent.

As soon as the video image of the vascular system has been built up, the surgeon can insert a catheter into the vascular system at an appropriate point. Switch 51 is closed to permit progress of the catheter to be monitored. The video output of the X-ray imaging device 1, showing the bones, dense tissue and the catheter, is summed with the video output of the peak hold circuit 6 at a summing node 20 optionally after inversion by an inverter 21. Whether or not the inverter 21 is introduced into the signal path depends on the position of a 2-way switch 52.

The visual effect of the summing described above is that the surgeon can see on the video screen 7 a normal X-ray picture of the portion of the patient's body on which he is operating. and overlaid on that picture is an exact map of the vascular system which normally would not show on an X-ray picture. The surgeon can see the catheter within the vascular system, and can guide it accurately to the clearly visible point of constriction.

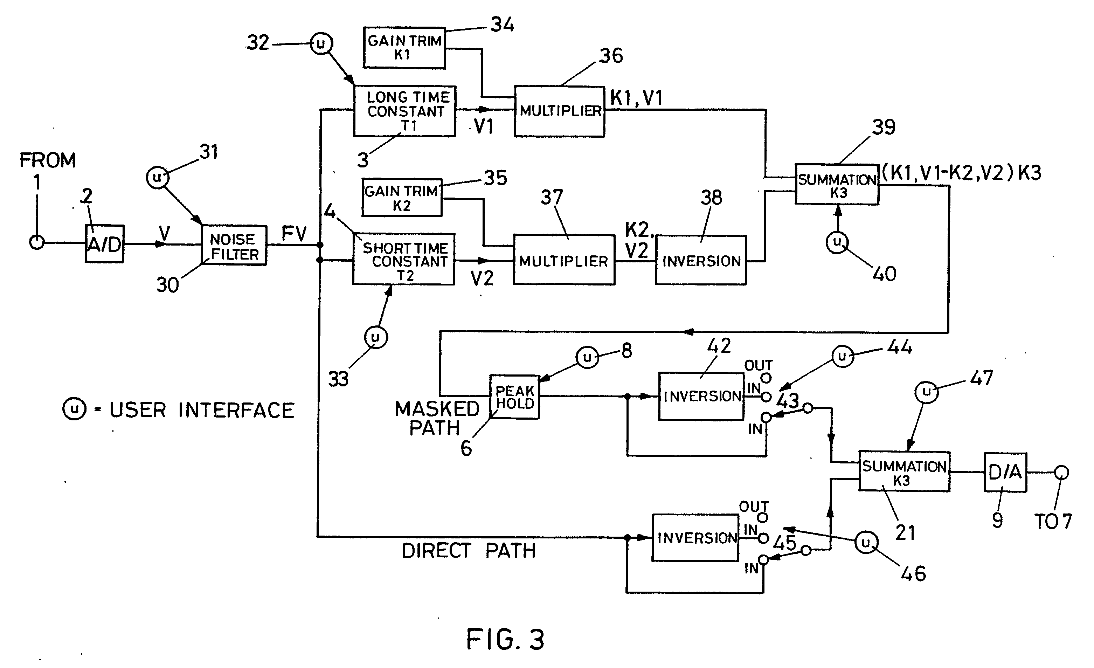

Figure 2 illustrates the digital vascular imaging apparatus of the invention generally. Figure 3, which uses the same reference numerals where appropriate, illustrates in rather more detail how the apparatus might be realised in practice.

In Figure 3 the digital output of the A/D converter 2 is shown as a video signal V. This is processed in a real-time noise filter 30 to improve the signal quality.

The filter 30 is typically a recursive low pass filter producing a filtered and substantially noise-free output FV. A user interface 31 is provided at the filter 30, for operator control to provide the optimum picture quality.

The processing blocks 3 and 4 of Figure 3 are processing circuits with long and short time constants T1 and T2 respectively. User interfaces 32 and 33 enable the time constants to be trimmed to vary the sensitivity of the movement detection. The averaged outputs of the circuit blocks 3 and 4 are shown as video signals V1 and V2 respectively.

Two gain trim circuits 34 and 35 apply gain trim signals K1 and K2 respectively to multiplier circuits 36 and 37 where the video signals V1 and V2 are multiplied by K1 and K2 to provide outputs K1.V1 and K2.V2.

In Figure 3 the difference generator 5 of Figure 2 is shown as an inversion circuit 38 for inverting the signal K2.V2 only, and a summation circuit 39. The summation circuit has a user-variable amplification function K3 so that the output of circuit 39 is (K1.V1-K2.V2) K3. By suitable adjustment of T1, T2 and K3 at user interfaces 32, 33 and 40 respectively the output (K1.V1 - K2.V2) K3 can be nulled. Then when a contrast agent is injected into the vascular system its progress can be monitored with the marginally earlier video signal K2. V2 being used to provide a real-time mask to cancel the static elements of the video signal K1. V1.

Figure 3 shows how the output of the peak hold circuit 6 can be applied directly, or after inversion by an inverter 42, or not at all, to the summing generator 21 by means of a 3-way switch 43 under operator control at 44.

Similarly, the functions of the switches 51 and 52 of Figure 1 are in Figure 3 combined in a single 3-way switch 45 under operator control at 46. The summing comparator 21 of Figure 3 has an amplification factor K4 which is operator variable at 47.

The apparatus illustrated in Figure 3 and described above is much less expensive than conventional digital vascular imaging apparatus, principally because it can use less costly and sophisticated X-ray apparatus as the imaging device 1. The image quality, is however, comparable or superior because of the incorporation of real-time noise reduction at the filter 30. Most significantly, the ease of use and speed of operation are dramatically improved. After initial adjustment of an X-ray image, injection of a small quantity of contrast agent is all that is necessary to complete the road-mapping of the vascular system and the surgeon can then proceed directly with the catheter manipulation and angioplasty.

## Claims

1. Apparatus for detecting, tracking and imaging movement, comprising a video display screen (7) for displaying a trace of a path of detected movement, an imaging device (1) for producing a series of first video signals each representing a scan or a number of scans of an area being surveyed and a series of second digital video signals each representing a later scan or a later number of scans of the same area being surveyed, CHARACTERISED IN THAT the first video signals and the second video signals are separated from each other by a constant-time delay, and in that difference generator means (5) are provided for achieving real time noise reduction by providing a difference signal representing the difference between each successive pair of first and second video signals in the series; and peak hold circuitry (6) for dividing the difference signal into subelements each corresponding to one pixel of the video display screen (7), comparing each subelement with a predetermined threshold value and causing that pixel to be displayed and maintained displayed if the comparison indicates that the subelement exceeds the threshold.

2. Apparatus according to claim 1, wherein the first video signal is a signal derived from an integration or average of a number of scans of the area being surveyed.

3. Apparatus according to claim 2, wherein the second video signal is a signal derived from an integration or average of a number of scans of the area being surveyed, over a time base which is shorter than that used for the first digital video signal but which ends at the same instant as the last scan contributing to the first digital signal.

4. Apparatus according to any preceding claim wherein the first and second video signals are each video signals that have been processed to provide real time noise filtration.

5. Apparatus according to any preceding claim, wherein the difference generator means (5) comprises means for inverting the first or the second video signal prior to summing the inverted video signal with the noninverted other video signal.

6. Apparatus according to any preceding claim, further comprising means for subjecting the output of the peak hold circuitry (6) to one or more image enhancement post processing techniques prior to supplying it to the video display screen (7).

7. Apparatus according to claim 6, wherein the post processing techniques include line edge enhancement.

8. Apparatus according to any preceding claim for use in a digital vascular imaging device, wherein the imaging device (1) is an X-ray imaging device with a digital video output.

9. Apparatus according to claim 8, wherein the X-ray imaging device (1) is under computer control to operate in synchronism with an intravenous injection apparatus for injecting a contrast agent into the bloodstream of a patient.

10. Apparatus according to claim 8 or claim 9, wherein the peak hold circuitry (6) maintains the pixel display until cancelled by an operator.

FIG.1

EP 0 403 092 A2

FIG. 2

FIG. 3

(u) = USER INTERFACE